(19) Europäisches Patentamt
European Patent Office
Office européen des brevets

(11) Veröffentlichungsnummer : **0 307 877 B1**

(12) # EUROPÄISCHE PATENTSCHRIFT

(45) Veröffentlichungstag der Patentschrift : **13.03.91 Patentblatt 91/11**

(51) Int. Cl.$^5$ : **C08F 4/60,** C08F 10/00

(21) Anmeldenummer : **88114984.3**

(22) Anmeldetag : **14.09.88**

(54) **Katalysator für die Olefinpolymerisation.**

(30) Priorität : **16.09.87 DE 3731069**

(43) Veröffentlichungstag der Anmeldung : **22.03.89 Patentblatt 89/12**

(45) Bekanntmachung des Hinweises auf die Patenterteilung : **13.03.91 Patentblatt 91/11**

(84) Benannte Vertragsstaaten : **BE DE ES FR GB IT NL**

(56) Entgegenhaltungen : **EP-A- 0 037 894**

(56) Entgegenhaltungen : **CHEMICAL ABSTRACTS, Band 77, Nr. 24, 11. Dezember 1972, Seite 23, Zusammenfassung Nr. 152883t, Columbus, Ohio, US; & JP-A-72 23 178 (SHOWA DENKO K.K.) 28-06-1972**

(73) Patentinhaber : **HOECHST AKTIENGESELLSCHAFT Postfach 80 03 20 W-6230 Frankfurt am Main 80 (DE)**

(72) Erfinder : **Kaminsky, Walter, Prof. Dr. Buschweg 52 W-2080 Pinneberg (DE)**
Erfinder : **Mädler, Hartmut, Dr. Köpferstrasse 40 W-7000 Stuttgart (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 307 877 B1

Jouve, 18, rue Saint-Denis, 75001 PARIS

## Beschreibung

Die vorliegende Erfindung bezieht sich auf einen Katalysator für die Olefinpolymerisation, welcher aus einer Übergangsmetallverbindung und einer metallorganischen Verbindung besteht und wobei die metallorganische Verbindung ein Umsetzungsprodukt einer Hydroxyverbindung mit einer aluminiumorganischen Verbindung ist.

Es ist ein Verfahren zur Herstellung von Polymermassen aus Polyolefinen und Stärke bekannt, bei welchem der aktive Cokatalysator durch Umsetzung von Stärke mit Al-trialkylen hergestellt wird, um anschließend zusammen mit einem Metallocen für die Polymerisation verwendet zu werden [vgl. DE-PS 3 007 433]. Hierbei bilden sich durch den Restwassergehalt der Stärke zunächst Aluminoxane, welche dann mit den OH-Gruppen der Stärke weiterreagieren (vgl. Kaminsky et al. in Reichert, Polymer Reactions Engineering, Hanser-Verlag 1983, S. 208-220, insb. S. 217, Fig. 7).

Die Erzeugung solcher aluminoxanhaltiger Produkte durch adsorptiv an einen organischen Träger gebundenes Wasser ist jedoch schwierig, weil das Trägermaterial auf einen bestimmten Restwasserwert getrocknet werden muß. Dieser Trocknungsprozeß ist energieaufwendig und der Restwassergehalt ist nur schwer auf einen definierten Wert zu bringen. Verwendet man hochgetrocknete Stärke, so zeigt das System Stärke/Al-trialkyl/Metallocen überhaupt keine Polymerisationsaktivität mehr.

Es wurde nun gefunden, daß ein hochaktiver Katalysator entsteht, wenn als Cokatalysator das Umsetzungsprodukt einer Verbindung mit einer oder mehreren aciden Hydroxylgruppen mit einem Aluminiumtrialkyl verwendet wird.

Geeignete Verbindungen mit einer oder mehreren aciden Hydroxylgruppen sind beispielsweise $C_2$- bis $C_{10}$-, vorzugsweise $C_6$- bis $C_8$-Polyalkohole, $C_3$- bis $C_6$-Monosaccharide und Diphenole. Genannt seien Sorbit, Glucose, Erythrit, 1, 4, 3, 6-Dianhydrosorbit, Monoanhydrosorbit, Brenzkatechin, Resorcin, Glykol, Diphenole, Hydrochinon, Isosorbit, vorzugsweise Glucose.

Diese Substanzen werden mit einem Aluminiumtrialkyl mit bis fünf C-Atomen in den Alkylketten, vorzugsweise Aluminiumtrimethyl umgesetzt. Dazu wird die Hydroxyverbindung in einem inerten Lösemittel gelöst oder suspendiert und das Aluminiumtrialkyl zugefügt. Die Reaktion wird bei einer Temperatur von 0 bis 60, vorzugsweise 20 bis 40°C durchgeführt und dauert 15 bis 240, vorzugsweise 100 bis 140 Minuten.

Eingesetzt wird bevorzugt eine der Anzahl der OH-Gruppen am Trägermaterial äquivalente Menge Aluminiumtrialkyl (1 atom Al pro OH-Gruppe). Dabei erhält man Zusammensetzungen, von denen man die folgende Struktur annimmt, dargestellt am Beispiel des Dianhydrosorbits

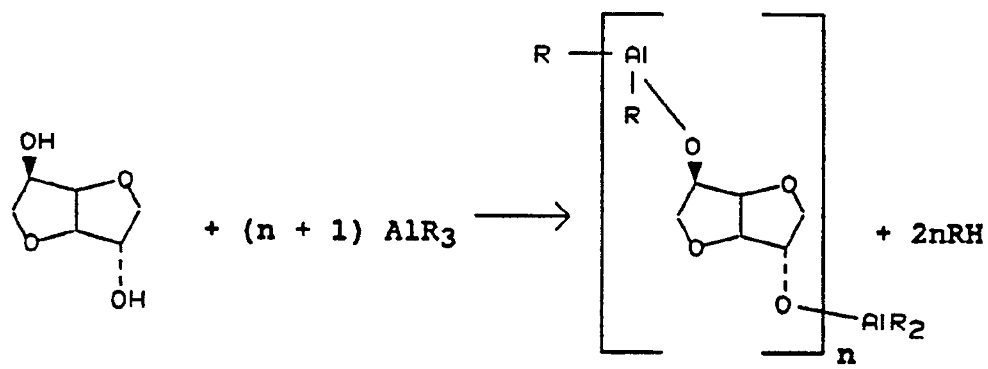

Für die Umsetzung wird vorzugsweise ein Lösemittel verwendet, welches auch für die Polymerisation eingesetzt wird.

Die Übergangsmetallverbindung des erfindungsgemäßen Katalysators ist eine Verbindung der Formel I

$$(cp)_2\,MeRHal \quad (I),$$

worin cp einen Cyclopentadienylrest und Me Titan, Zirkon oder Hafnium, vorzugsweise Zirkon, bedeuten, R einen Cyclopentadienylrest, ein Halogenatom, vorzugsweise Chlor, oder eine $C_1$- bis $C_6$-, vorzugsweise $C_1$- bis $C_3$-Alkylgruppe ist und Hal ein Halogenatom, vorzugsweise Chlor, bedeutet,
oder eine Verbindung der Formel II

$$VO_nCl_{3-n} \quad (II),$$

worin n 0 bis 3 bedeutet.

Der erfindungsgemäße Katalysator wird zur Polymerisation von 1-Olefinen der Formel $R-CH=CH_2$, in der R ein Wasserstoffatom oder einen Alkylrest mit 1 bis 28 C-Atomen, vorzugsweise 1 bis 10 C-Atomen, insbesondere einem C-Atom bedeutet, eingesetzt, beispielsweise Ethylen, Propylen, Buten-(1), Hexen-(1), 4-Methylpenten-(1), Octen-(1). Besonders bevorzugt ist Ethylen.

Die Polymerisation wird in bekannter Weise in Lösung, in Suspension oder in der Gasphase, kontinuierlich oder diskontinuierlich, ein- oder mehrstufig bei einer Temperatur von – 60 bis 100°C, vorzugsweise – 20 bis 80°C, durchgeführt. Der Druck beträgt 0, 5 bis 64 bar. Bevorzugt ist die Polymerisation in dem technisch besonders interessanten Druckbereich von 5 bis 64 bar.

Dabei wird die Übergangsmetallverbindung in einer Konzentration, bezogen auf Titan, Zirkon oder Vanadin von $10^{-3}$ bis $10^{-7}$, vorzugsweise $10^{-4}$ bis $10^{-6}$ mol Ti, Zr oder V pro $dm^3$ Lösemittel bzw. pro Liter Reaktorvolumen angewendet. Die metallorganische Verbindung wird in einer Konzentration von $10^{-4}$ bis $10^{-1}$ mol, vorzugsweise $10^{-3}$ bis $10^{-2}$ mol pro $dm^3$ Lösemittel bzw. pro $dm^3$ Reaktorvolumen verwendet. Prinzipiell sind aber auch höhere Konzentrationen möglich.

Die Polymerisation wird in einem für das Ziegler-Niederdruckverfahren gebräuchlichen inerten Lösemittel durchgeführt, beispielsweise in einem aliphatischen oder cycloaliphatischen Kohlenwasserstoff ; als solcher sei beispielsweise Butan, Pentan, Hexan, Heptan, Isooctan, Cyclohexan, Methylcyclohexan genannt. Weiterhin kann eine Benzin- bzw. hydrierte Dieselölfraktion, die sorgfältig von Sauerstoff, Schwefelverbindungen und Feuchtigkeit befreit worden ist, benutzt werden. Brauchbar ist auch Toluol. Schließlich kann auch das zu polymerisierende Monomere als Löse- oder Suspensionsmittel eingesetzt werden. Die mittlere Molmasse des Polymerisats kann in bekannter Weise geregelt werden ; vorzugsweise wird dazu Wasserstoff verwendet.

Der große Vorteil dieser neuen Katalysatorsysteme liegt unter anderem darin begründet, daß die neuen Cokatalysatoren passive Füllstoffe und aktive katalytische Verbindungen zugleich sind.

Außerdem können mit den neuen Katalysatorsystemen Polyolefine mit extrem hohen mittleren Molmassen erzeugt werden, die technisch besonders interessant sind.

Beispiel 1

In einem 250 $cm^3$-Rundkolben wurden 100 $cm^3$ Toluol vorgelegt und 5 g Glucose (28 mmol) darin suspendiert. Unter starkem Rühren wurden innerhalb 30 min 140 mmol Aluminiumtrimethyl in 50 $cm^3$ Toluol gelöst zugetropft. Man ließ noch 120 h bei Raumtemperatur nachreagieren.

Das Umsetzungsprodukt konnte direkt als Suspension zur Polymerisation eingesetzt werden.

Beispiel 2

Es wurde wie in Beispiel 1 gearbeitet. Abweichend wurden 5 g Sorbit (27, 4 mmol) vorgelegt und mit 165 mmol Aluminiumtrimethyl umgesetzt.

Beispiel 3

Darstellung eines aluminoxananalogen Cokatalysators aus Isosorbit und $Al(CH_3)_3$.

801,4 mg (5,2 mmol) 1,4 ; 3,6-Dianhydro-D-sorbit wurden in einen 250 $cm^3$-Rundkolben gegeben und in 20 $cm^3$ abs. Toluol suspendiert. Dazu tropfte man unter heftigem Rühren 80 $cm^3$ einer toluolischen $Al(CH_3)_3$-Lösung (20,8 mmol) bei 0-10°C möglichst zügig hinzu. Das molare Verhältnis von Hydroxylgruppen zu $AlMe_3$ betrug 1 : 2.

Es fand zunächst eine starke Gasentwicklung statt, wobei auch eine Erwärmung eintrat. Die Vorreaktion ließ man noch ca. 48 h unter Rühren laufen. Bereits aber nach zwei Stunden Reaktionszeit hatte sich die vorher heterogene Suspension in eine milchig trübe Lösung verwandelt. Es war kein ungelöstes Isosorbit mehr vorhanden. Zog man das Toluol nach Beendigung des Versuchs ab, so erhielt man eine farblose, glasartige Festsubstanz. Die Substanz war ähnlich wie Methylaluminoxan an der Luft pyrophor. Der kryoskopisch ermittelte Oligomergrad betrug n = 4 (M = 1120 g/mol).

Beispiel 4

Herstellung des Cokatalysators aus Erythrit und $Al(CH_3)_3$.

3,175 g Erythrit (trocken, 26 mmol) wurde in 100 $cm^3$ absoluten Toluol suspendiert. Dazu ließ man zügig bei 0°C 100 $cm^3$ einer toluolischen $Al(CH_3)_3$-Lösung zutropfen (104 mmol). Nach einer Stunde erwärmte man den Ansatz auf Raumtemperatur und ließ noch 48 h weiterreagieren. Für eine typische Polymerisation wurde 1/5 eines derartigen Ansatzes als Cokatalysator für die Polymerisation eingesetzt.

Beispiel 5

Polymerisation mit dem modifizierten Katalysatorsystem 1,4 ; 3,6-Dianhydrosorbit/$Al(CH_3)_3$-$VCl_3$.

In einen vorher evakuierten, ausgeheizten und mit Argon gespülten 1-$dm^3$ Glasautoklaven wurden im Argongegenstrom nacheinander 504 mg ($3{,}2.10^{-3}$ mol/$dm^3$) $VCl_3$, 310 $cm^3$ absolutes Toluol sowie 10 $cm^3$ einer vorher entsprechend Beispiel 3 hergestellten Lösung des Reaktionsproduktes aus 1,4 ; 3,6-Dianhydrosorbit und $Al(CH_3)_3$ zugegeben.

Nach Temperierung der Lösung auf 70°C wurde durch Aufpressen von Ethylen (8 bar) die Polymerisation gestartet und während 2 h fortgeführt.

| | |
|---|---|
| Ausbeute : | 34,7 g |
| Produktivität : | 212 g PE/g V |
| Viskositätszahl : | 34,1 $cm^3$/g. |

Beispiel 6

Der in Beispiel 1 hergestellte Cokatalysator wurde in Toluol suspendiert. Man gab von dieser Suspension $10^{-2}$ mol, bezogen auf Aluminium, in einen mit 300 $cm^3$ Toluol befüllten Glasautoklaven. Die Suspension wurde auf 70°C temperiert, $3 \times 10^{-6}$ mol Dicyclopentadienyl-Zirkondichlorid zugegeben und 1 Stunde Ethylen bei einem Druck von 7 bar polymerisiert.

| | |
|---|---|
| Ausbeute : | 3,1 g |
| Produktivität : | 11230 g PE/g Zr |
| Molmasse : | 80000 |
| Dichte : | 0,98 g/$cm^3$ |

**Ansprüche**

**Patentansprüche für die Vertragsstaaten : BE, DE, FR, GB, IT, NL**

1. Katalysator für die Olefinpolymerisation, bestehend aus einer Übergangsmetallverbindung und einer metallorganischen Verbindung, dadurch gekennzeichnet, daß die Übergangsmetallverbindung eine Verbindung der Formel I

$$(cp)_2\, MeRHal \quad (I),$$

worin cp einen Cyclopentadienylrest, Me Titan, Zirkon oder Hafnium bedeutet, R einen Cyclopentadienylrest, ein Halogenatom oder eine $C_1$- bis $C_6$-Alkylgruppe ist und Hal ein Halogenatom bedeutet, oder eine Verbindung der Formel II

$$VO_nCl_{3-n} \quad (II),$$

worin n 0 bis 3 bedeutet, ist und die metallorganische Verbindung durch Umsetzung bei 0 bis 60°C einer Verbindung mit einer oder mehreren aciden Hydroxylgruppen mit einem Aluminiumtrialkyl mit bis fünf C-Atomen in den Alkylketten erhalten wurde.

2. Verfahren zur Herstellung eines Katalysators für die Olefinpolymerisation durch Zusammenbringen einer Übergangsmetallverbindung mit einer metallorganischen Verbindung, dadurch gekennzeichnet, daß man als

metallorganische Verbindung das Umsetzungsprodukt durch Umsetzung bei 0 bis 60°C einer Verbindung mit einer oder mehreren aciden Hydroxylgruppen mit einem Aluminiumtrialkyl mit bis fünf C-Atomen in den Alkylketten einsetzt.

3. Verwendung des Katalysators nach Anspruch 1 zum Polymerisieren von 1-Olefinen der Formel R–$CH=CH_2$, in der R ein Wasserstoffatom oder einen Alkylenrest mit 1 bis 28 C-Atomen bedeutet.

4. Verfahren zur Herstellung eines 1-Olefin-Polymers durch Polymerisation eines 1-Olefins der Formel R–$CH=H_2$, worin R ein Wasserstoffatom oder eine Alkylgruppe mit 1 bis 28 C-Atomen ist, bei einer Temperatur von – 60 bis 100°C, bei einem Druck von 0,5 bis 64 bar, in Lösung, in Suspension oder in der Gasphase, in Gegenwart eines Katalysators, welcher aus einer Übergangsmetallverbindung und einer metallorganischen Verbindung besteht, dadurch gekennzeichnet, daß die Polymerisation in Gegenwart eines Katalysators durchgeführt wird, dessen Übergangsmetallverbindung eine Verbindung der Formel I

$$(cp)_2\ MeRHal \quad (I),$$

worin cp einen Cyclopentadienylrest, Me Titan, Zirkon oder Hafnium bedeutet, R einen Cyclopentadienylrest, ein Halogenatom oder eine $C_1$- bis $C_6$-Alkylgruppe ist und Hal ein Halogenatom bedeutet, oder eine Verbindung der Formel II

$$VO_nCl_{3-n} \quad (II),$$

worin n 0 bis 3 bedeutet, ist und dessen metallorganische Verbindung durch Umsetzung bei 0 bis 60°C einer Verbindung mit einer oder mehreren aciden Hydroxylgruppen mit einem Aluminiumtrialkyl mit bis fünf C-Atomen in den Alkylketten erhalten wurde.

**Patentanspruch für den Vertragsstaat : ES**

1. Verfahren zur Herstellung eines 1-Olefin-Polymers durch Polymerisation eines 1-Olefins der Formel R–$CH=CH_2$, worin R ein Wasserstoffatom oder eine Alkylgruppe mit 1 bis 28 C-Atomen ist, bei einer Temperatur von – 60 bis 100°C, bei einem Druck von 0,5 bis 64 bar, in Lösung, in Suspension oder in der Gasphase, in Gegenwart eines Katalysators, welcher aus einer Übergangsmetallverbindung und einer metallorganischen Verbindung besteht, dadurch gekennzeichnet, daß die Polymerisation in Gegenwart eines Katalysators durchgeführt wird, dessen Übergangsmetallverbindung eine Verbindung der Formel I

$$(cp)_2\ MeRHal \quad (I),$$

worin cp einen Cyclopentadienylrest, Me Titan, Zirkon oder Hafnium bedeutet, R einen Cyclopentadienylrest, ein Halogenatom oder eine $C_1$- bis $C_6$-Alkylgruppe ist und Hal ein Halogenatom bedeutet, oder eine Verbindung der Formel II

$$VO_nCl_{3-n} \quad (II),$$

worin n 0 bis 3 bedeutet, ist und dessen metallorganische Verbindung durch Umsetzung bei 0 bis 60°C einer Verbindung mit einer oder mehreren aciden Hydroxylgruppen mit einem Aluminiumtrialkyl mit bis fünf C-Atomen in den Alkylketten erhalten wurde.

**Claims**

**Claims for the Contracting States BE, DE, FR, GB, IT, NL**

1. catalyst for olefin polymerization consisting o a transition metal compound and an organometallic compound, in which the transition metal compound is a compound of the formula I

$$(cp)_2MeRHal \quad (I)$$

in which cp denotes a cyclopentadienyl radical, Me denotes titanium, zirconium or hafnium, R is a cyclopentadienyl radical, a halogen atom or a $C_1$- to $C_6$-alkyl group and Hal denotes a halogen atom, or a compound of the formula II

$$VO_nCl_{3-n} \quad (II)$$

in which n denotes 0 to 3, and the organometallic compound has been obtained by reaction at 0 to 60°C of a compound with one or more acid hydroxyl groups with an aluminum trialkyl with up to five carbon atoms in the alkyl chains.

2. A process for the preparation of a catalyst for olefin polymerization by bringing together a transition metal compound with an organometallic compound, which comprises using the reaction product by reaction at 0 to 60°C of a compound with one or more acid hydroxyl groups with an aluminum trialkyl with up to 5 carbon atoms in the alkyl chains as the organometallic compound.

3. Use of a catalyst as claimed in claim 1 for polymerization of a 1-olefin of the formula $R–CH=CH_2$, in which R denotes a hydrogen atom or an alkylene radical with 1 to 28 carbon atoms.

4. A process for the preparation of a 1-olefin polymer by polymerization of a 1-olefin of the formula $R–CH=CH_2$, in which R is a hydrogen atom or an alkyl group with 1 to 28 carbon atoms, at a temperature of – 60 to 100°C under a pressure of 0.5 to 64 bar in solution, in suspension or in the gas phase, in the presence of a catalyst which consists of a transition compound and an organometallic compound, which comprises carrying out the polymerization in the presence of a catalyst, the transition metal compound of which is a compound of the formula I

$$(cp)_2\,MeRHal \quad (I)$$

in which cp denotes a cyclopentadienyl radical, Me denotes titanium, zirconium or hafnium, R is a cyclopentadienyl radical, a halogen atom or a $C_1$- to $C_6$-alkyl group and Hal denotes a halogen atom, or a compound of the formula II

$$VO_nCl_{3-n} \quad (II)$$

in which n denotes 0 to 3, and the organometallic compound of which has been obtained by reaction at 0 to 60°C of a compound with one or more acid hydroxyl groups with an aluminum trialkyl with up to five carbon atoms in the alkyl chains.

**Claims for the Contracting States ES**

1. A process for the preparation of a 1-olefin polymer by polymerization of a 1-olefin of the formula $R–CH=CH_2$, in which R is a hydrogen atom or an alkyl group with 1 to 28 carbon atoms, at a temperature of – 60 to 100°C under a pressure of 0.5 to 64 bar in solution, in suspension or in the gas phase, in the presence of a catalyst which consists of a transition metal compound and an organometallic compound, which comprises carrying out the polymerization in the presence of a catalyst, the transition metal compound of which is a compound of the formula I

$$(cp)_2MeRHal \quad (I)$$

in which cp denotes a cyclopentadienyl radical, Me denotes titanium, zirconium or hafnium, R is a cyclopentadienyl radical, a halogen atom or a $C_1$- to $C_6$-alkyl group and Hal denotes a halogen atom, or a compound of the formula II

$$VO_nCl_{3-n} \quad (II)$$

in which n denotes 0 to 3, and the organometallic compound of which has been obtained by reaction at 0 to 60°C of a compound with one or more acid hydroxyl groups with an aluminum trialkyl with up to 5 carbon atoms in the alkyl chains.

**Revendications**

**Revendications pour les Etats Contractants BE, DE, FR, GB, IT, NL**

1. Catalyseur pour la polymérisation d'oléfines, catalyseur qui est constitué d'un composé d'un métal de

transition et d'un composé organométallique et qui est caractérisé en ce que le composé de métal de transition est un composé répondant à la formule I

$$(cp)_2\ MeRHal \quad (I)$$

dans laquelle cp représente un radical cyclopentadiényle, Me représente le titane, le zirconium ou l'hafnium, R représente un radical cyclopentadiényle, un atome d'halogène, ou un radical alkyle en $C_1$-$C_6$, et Hal représente un atome d'halogène, ou un composé répondant à la formule II :

$$VO_nCL_{3-n} \quad (II)$$

dans laquelle n désigne un nombre de 0 à 3, et le composé organométallique a été obtenu par réaction, à une température de 0 à 60°C, d'un composé porteur d'un ou de plusieurs radicaux hydroxy acides avec un trialkylaluminium contenant au plus 5 atomes de carbone dans les chaînes alkyles.

2. Procédé de préparation d'un catalyseur pour la polymérisation d'oléfines, par mise en contact d'un composé d'un métal de transition avec un composé organométallique, procédé caractérisé en ce qu'on utilise comme composé organométallique le produit résultant de la réaction à une température de 0 à 60°C d'un composé porteur d'un ou de plusieurs radicaux hydroxy acides avec un trialkyl-aluminium contenant au plus 5 atomes de carbone dans les chaînes alkyles.

3. Application du catalyseur selon la revendication 1 à la polymérisation d'α-oléfines répondant à la formule $R-CH=CH_2$ dans laquelle R représente un atome d'hydrogène ou un radical alkyle contenant de 1 à 28 atomes de carbone.

4. Procédé pour préparer un polymère d'α-oléfine par polymérisation d'une α-oléfine de formule $R-CH=CH_2$ dans laquelle R représente un atome d'hydrogène ou un radical alkyle contenant de 1 à 28 atomes de carbone, à une température de – 60 à 100°C, sous une pression de 0, 5 à 64 bar, en solution, en suspension ou en phase gazeuse, en présence d'un catalyseur constitué d'un composé d'un métal de transition et d'un composé organométallique, procédé caractérisé en ce qu'on effectue la polymérisation en présence d'un catalyseur dont le composé de métal de transition est un composé répondant à la formule I :

$$(cp)_2MeRHal \quad (I)$$

dans laquelle cp représente un radical cyclopentadiényle, Me représente le titane, le zirconium ou l'hafnium, R représente un radical cyclopentadiényle, un atome d'halogène, ou un radical alkyle en $C_1$-$C_6$, et Hal représente un atome d'halogène, ou un composé répondant à la formule II :

$$VO_nCl_{3-n} \quad (II)$$

dans laquelle n désigne un nombre de 0 à 3, et dont le composé organométallique a été obtenu par réaction, à une température de 0 à 60°C, d'un composé porteur d'un ou de plusieurs radicaux hydroxy acides avec un trialkylaluminium contenant au plus 5 atomes de carbone dans les chaînes alkyles.

**Revendications pour L'Etat Contractant : ES**

1. Procédé pour préparer un polymère d'α-oléfine par polymérisation d'une α-oléfine de formule $R-CH=CH_2$ dans laquelle R représente un atome d'hydrogène ou un radical alkyle contenant de 1 à 28 atomes de carbone, à une température de – 60 à 100°C, sous une pression de 0,5 à 64 bar, en solution, en suspension ou en phase gazeuse, en présence d'un catalyseur constitué d'un composé d'un métal de transition et d'un composé organométallique, procédé caractérisé en ce qu'on effectue la polymérisation en présence d'un catalyseur dont le composé de métal de transition est un composé répondant à la formule I :

$$(cp)_2MeRHal \quad (I)$$

dans laquelle cp représente un radical cyclopentadiényle, Me représente le titane, le zirconium ou l'hafnium, R représente un radical cyclopentadiényle, un atome d'halogène, ou un radical alkyle en $C_1$-$C_6$, et Hal représente un atome d'halogène, ou un composé répondant à la formule II :

$$VO_nCl_{3-n} \quad (II)$$

dans laquelle n désigne un nombre de 0 à 3, et dont le composé organométallique a été obtenu par réaction, à une température de 0 à 60°C, d'un composé porteur d'un ou de plusieurs radicaux hydroxy acides avec un trialkylaluminium contenant au plus 5 atomes de carbone dans les chaînes alkyles.